# EUROPEAN PATENT SPECIFICATION

(11) **EP 1 780 054 B1**
(45) Date of publication and mention of the grant of the patent: **18.01.2012**
(21) Application number: 05766457.5
(22) Date of filing: 20.07.2005
(51) Int. Cl.: B60C 15/00, B60C 15/06, B29D 30/48

(54) **TIRE AND METHOD OF MANUFACTURING THE SAME**
REIFEN UND REIFENHERSTELLUNGSVERFAHREN
PNEUMATIQUE ET MÉTHODE POUR FABRIQUER CELUI-CI

(30) Priority: 03.08.2004 JP 2004226779
(43) Date of publication of application: 02.05.2007
(73) Proprietor: Bridgestone Corporation, Tokyo 104-8340 (JP)
(72) Inventor: Kamegawa, Tatsuhiko, c/o Bridgestone Corporation, Kodaira-shi, Tokyo 1878531 (JP); Kato, Kenshiro, c/o Bridgestone Corporation, Kodaira-shi, Tokyo 1878531 (JP); Tsuruta, Makoto, c/o Bridgestone Corporation, Kodaira-shi, Tokyo 1878531 (JP); Miyazono, Toshiya, c/o Bridgestone Corporation, Kodaira-shi, Tokyo 1878531 (JP); Waki, Yoshiyuki, c/o Bridgestone Corporation, Kodaira-shi, Tokyo 188531 (JP)
(74) Representative: Whalley, Kevin
(86) International application number: PCT/JP2005/013303
(87) International publication number: WO 2006/013725

(56) References cited:
- EP-A- 1 522 426
- WO-A-03/029033
- JP-A- 11 301 224
- JP-A- 11 301 224
- JP-A- 58 105 806
- JP-A- 61 268 507
- JP-A- 2001 191 757
- JP-A- 2001 191 757
- JP-A- 2002 012 011
- JP-A- 2002 067 629
- JP-A- 2002 067 629
- JP-A- 2004 098 826
- JP-A- 2004 098 826
- JP-A- 2005 112 075
- US-A- 4 289 184

## Description

### TECHNICAL FIELD

This invention relates to a tire having excellent bead portion durability and steering stability and facilitating the production by simplifying a structure of a bead portion and a method of producing the same.

### RELATED ART

As a means for facilitating the production of the tire, there are known a technique of sandwiching a carcass ply between reinforcing layers (so-called bead coreless technique) as disclosed in Patent Documents 1-3, a technique of sandwiching a carcass ply between bead cores or embedding in a core as disclosed in Patent Documents 4-9, and so on.
Patent Document 1: WO 99/25572
Patent Document 2: WO 00/71366
Patent Document 3: WO 02/30690
Patent Document 4: JP-A-H11-28915
Patent Document 5: WO 00/34059
Patent Document 6: WO 00/73093
Patent Document 7: JP-A-2002-67629
Patent Document 8: JP-A-2002-67630
Patent Document 9: WO 02/452

### DISCLOSURE OF THE INVENTION

### PROBLEMS TO BE SOLVED BY THE INVENTION

All of the above conventional techniques are easy in the production because the end portion of the carcass ply is not necessary to be wound around the bead core. However, the tensile stress of the carcass ply generated in the filling of air is kept only by the bead core or shear stress between the reinforcing layer and the carcass ply, so that there is a problem that even if the tensile stress can be kept at the time of a new product, the rubber is deteriorated with the lapse of time to lower the keeping force.

In order to solve this problem, it is required to enhance the press fitting force between the bead core or reinforcing layer and the carcass ply. Concretely, it is effective to utilize a fitting pressure generated in a bead base portion when the bead portion is fitted onto a rim. However, the technique disclosed, for example, in Patent Documents 3, 4, 5, 6, 7 and 9 is not a form utilizing such a fitting pressure, but utilizes only a force corresponding to an air pressure from an inner face of the tire as a press fitting force, so that the durability in the use over a long period of time is insufficient.

In the technique disclosed in Patent Documents 1, 2 and 8, it is possible to effectively utilize the fitting pressure to a certain extent by properly setting the rigidity of the reinforcing layer or bead core located at upper face and lower face of the end portion of the carcass ply. In the technique omitting the bead core as disclosed in Patent Documents 1 and 2, however, the carcass ply locates substantially in a thickness center of the bead portion in an axial direction of the tire, and hence the effective tension is not generated in the carcass ply even under loading, so that there is a problem that a lateral spring inevitable for the steering property of the tire lowers.

In Patent Document 8, the carcass ply locates outward from the thickness center in the axial direction of the tire, so that the lateral spring lowers but also the compression stress is repeatedly applied to the carcass ply under loading, and hence the durability to fatigue of the carcass ply is considerably impaired. JP-11301224, JP58105806 and EP1522426 disclose known tire structures.

It is, therefore, an object of the invention to propose a tire realizing the simplification of the bead portion structure without sacrificing the bead portion durability and the steering stability.

### MEANS FOR SOLVING PROBLEMS

(1) The summary of an aspect of the invention is as provided in claim 1.

**(deleted]**

(2) A tire according to item (1), which further comprises a protection layer covering a portion of the carcass in contact with the face of the bead core at the side of the bead base.

(3) A tire according to item (2), wherein the protection layer is a rubberized layer of cords or wires extending at a small angle with respect to a circumferential direction of the tire and arranged side by side on a plane parallel to the bead base, and a total rigidity thereof in the circumferential direction is equal to or smaller than a total rigidity of a portion of the bead core divided by the passing of the carcass and located inside the tire.

(4) A tire according to item (1), (2) or (3), wherein a circumferential reinforcing layer is further arranged along a side face of a portion of the bead core divided by the passing of the carcass and located outside the tire.

(5) A tire according to any one of items (1)-(4), wherein a reinforcing layer made from cord or wire reinforcing elements arranged at an angle of not less than 10° but not more than 60° with respect to the circumferential direction is further disposed along a side face of a portion of the bead core divided by the passing of the carcass and located outside the tire.

(6) A method of producing a tire as described in any one of items (1)-(5), characterized in that when a bead core is shaped by continuously winding a bead wire, a portion of the bead core to be divided by the passing of a carcass and located inside the tire is first formed, and a carcass ply is press-fitted on this portion, and then a portion of the bead core to be divided by the passing of a carcass and located outside the tire is formed by continuously winding the bead wire again.

(7) A method of producing a tire according to item (6), wherein after the formation of the bead core, a protection layer of waved cords or wires is formed along an inner peripheral face of the bead core.

(8) A method of producing a tire according to item (6) or (7), wherein after the formation of the bead core, a circumferential reinforcing layer of previously-tensioned cords or wires is formed along a side face of the portion of the bead core located outside the tire

(9) A method of producing a tire according to item (6) or (7), wherein after the formation of the bead core, a reinforcing layer made of cord or wire reinforcing elements is formed along a side face of the portion of the bead core located outside the tire.

### EFFECT OF THE INVENTION

According to the invention, there can be provided tires having excellent bead portion durability and steering stability and realizing the simplification of the bead portion structure.

### BRIEF DESCRIPTION OF THE DRAWINGS

FIG. 1 is a schematic view of a bead portion structure in the tire according to the invention.
FIG. 2 is a schematic view of a bead portion structure added with a protection layer.
FIG. 3 is a schematic view of a bead portion structure added with a circumferential reinforcing layer.
FIG. 4 is a schematic view of a bead portion structure added with a protection layer and a circumferential reinforcing layer.
FIG. 5 is a schematic view of another bead portion structure.
FIG. 6 is a schematic view of another bead portion structure.
FIG. 7 is a schematic view of another bead portion structure.
FIG. 8 is a schematic view of a comparative bead portion structure.
FIG. 9 is a schematic view of the conventional bead portion structure.
FIG. 10 is a schematic view of a comparative bead portion structure.
FIG. 11 is a schematic view of a comparative bead portion structure.
FIG. 12 is a schematic view of a comparative bead portion structure.
FIG. 13 is a schematic view of a comparative bead portion structure.

### DESCRIPTION OF REFERENCE SYMBOLS

- 1: bead core
- 2: carcass
- 3: protection layer
- 4: circumferential reinforcing layer

### BEST MODE FOR CARRYING OUT THE INVENTION

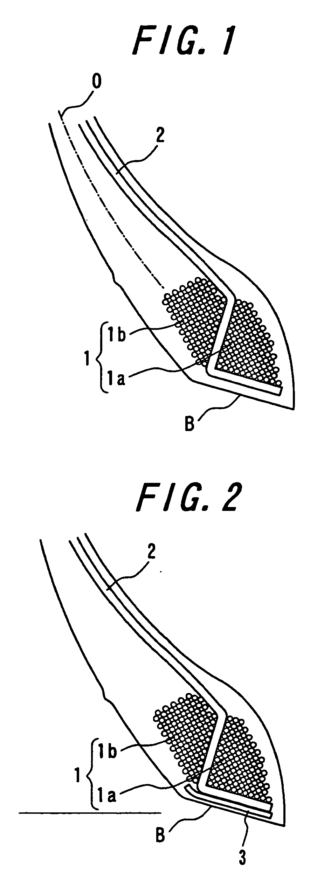

The tire of the invention will be concretely described with reference to the accompanying drawings below.
That is, as a bead portion of the tire is shown in FIG. 1, when a carcass 2 is toroidally extended between a pair of bead cores 1 embedded in respective bead portions, it is important that the carcass 2 is combined with the bead core 1 through such a pathway that the carcass 2 passes inside a thickness center O of the bead portion in an axial direction of the tire and reaches to a face of the bead core 1 inside the tire and then passes through the bead core 1 from an inside of the tire toward an outside thereof and terminates in contact with a face of the bead core B at a side of a bead base 1.

In order to prevent the lowering of the keeping force of the carcass ply between the bead core 1 and the carcass 2 due to the deterioration of rubber with the lapse of time, it is required to enhance the press fitting force between the bead core 1 and the carcass 2, which is preferable to utilize a fitting pressure to a rim. Because, a pressure constantly acting in the neighborhood of the bead portion is air pressure and a fitting pressure, and such a fitting pressure usually has a value higher by about several times than the air pressure. The fitting pressure utilizes as a source a force resisting to extension in the circumferential direction when a member having a high circumferential rigidity such as bead core is fitted into the rim, so that the most effective utilizing form thereof is a case that the end of the carcass ply is arranged between the bead core having a high circumferential rigidity and the bead base.

In the invention, therefore, the fitting pressure to the rim is effectively utilized by extending the ply end of the carcass 1 up to a position of contacting with the face of the bead core 1 at the side of the bead base B based on the above thinking, whereby the end portion of the carcass 1 is strongly fixed.

Also, the presence of the carcass 2 in the bead portion at either inside or outside of the tire bordering the thickness center O in the axial direction of the tire in the vicinity of the bead core 1 has a very important meaning from a viewpoint of the steering stability and the durability of the carcass itself. That is, when the carcass locates outside the tire from the thickness center O in the axial direction of the tire at a state that the bending is caused in the bead portion by falling down the bead portion under loading, the carcass locates inside the bending and hence the tension largely contributing to the lateral spring as an important feature for the steering stability is not generated but also the compression stress is repeatedly applied to considerably deteriorate the fatigue durability of the carcass itself. Therefore, in order to overcome these problems, it is required that the carcass is arranged outside the bending in the vicinity of the bead portion, i.e. the carcass is arranged inside the tire from the thickness center O in the axial direction of the tire.

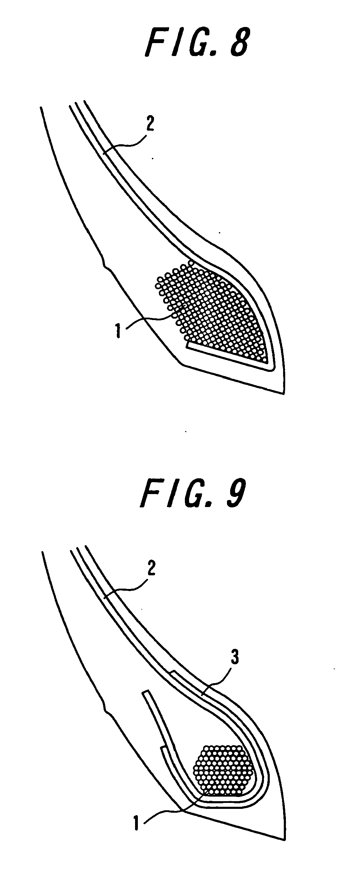

In order to satisfy the above two requirements, there is considered the arrangement of the carcass 2 as shown in FIG. 8. In this case, however, the ply end of the carcass 2 is required to fold from an inside of the tire toward an outside thereof likewise the conventional turnup structure, so that it is difficult to attain the simplification in view of the production, which can not be recommended.

In order to attain the simplification in view of the production, it is advantageous that when the bead core 1 is shaped by continuously winding the bead wire, there is considered that the bead core is divided into two inner and outer portions in which the inner portion (bead core portion 1a in FIG. 1) is first formed by the continuous winding of the bead wire and the carcass ply 2 is pressed to the portion la and the outer portion (bead core portion 1b in FIG. 1) is formed by the continuous winding of the bead wire again. Therefore, as shown in FIG. 1, the structure of the bead core 1 is made to a pathway that the carcass 2 passes a face of the bead core 1 inside the tire and through the bead core 1 from an inside of the tire toward outside thereof and terminates in contact with a face of the bead core at a side of a bead base B.

Thus, the carcass 2 is combined with the bead core 1 by the pathway according to the invention, whereby the carcass can be fixed and kept to the bead core 1 over a long time of period while maintaining the production easiness and hence the steering stability and the durability of the carcass itself can be ensured.

Now, when the tire is used under a very severe condition, the ply end of the carcass 2 contacting with the lower face portion 1a of the bead core 1 inside the tire may be damaged by rubbing the rim with the bead base portion. As shown in FIG. 2, therefore, it is desirable that a protection layer 3 is arranged so as to cover the ply end portion of the carcass 2. In order to more enhance the effect of the protection layer 3, it is preferable to be a rubberized layer containing cords or wires extending a small angle with respect to the circumferential direction of the tire which are arranged side by side on a plane parallel to the bead base face. Because, the rubbing between the rim and the bead base portion is composed mainly of a circumferential slippage produced by traction-braking forces applied to the tire and added with an axial slippage produced by a lateral force applied to the tire on the plane parallel to the bead base face, so that the protection layer 3 is necessary to have an axial rigidity on the plane parallel to the bead base face in addition to the circumferential rigidity.

Also, it is unfavorable that a layer having a high circumferential rigidity is existent between the ply end portion of the carcass 2 and the bead base B from a viewpoint of the effective utilization of the fitting pressure as mentioned above, so that the total rigidity in the circumferential direction is desirable to be equal to or less than the total rigidity of the portion la of the bead core 1 inside the tire.

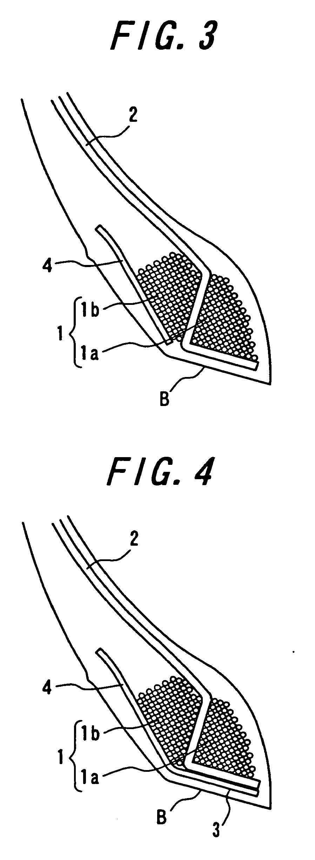

The lateral spring is sufficiently ensured by the bead portion structure according to the invention. However, if it is intended to more enhance the lateral spring constant, as shown in FIG. 3, it is desirable to arrange a circumferential reinforcing layer 4 along a side face of the portion 1b of the bead core 1 outside the tire. Even in this case, the simplification of the production is maintained by continuously winding the cord or wire constituting the reinforcing layer along the side face of the bead core portion 1b to form the reinforcing layer 4.

As the circumferential reinforcing layer 4, the cord or wire having a wavy form on the plane substantially parallel to the outer side face of the bead core is arranged in the circumferential direction so as to be adjoined with each other.

Moreover, it is not necessary that the protection layer 3 and the circumferential reinforcing layer 4 are separately formed from each other. As shown in FIG. 4, the protection layer 3 and the circumferential reinforcing layer 4 may be an integrally united composite layer. In the latter case, the previously wavy-formed cord or wire is wound as it is to form the protection layer, and then a pre-tension is applied to the cord or wire at a time of reaching to the reinforcing layer portion and wound in the circumferential direction, whereby the production easiness can be further enhanced but also the circumferential rigidity can be increased only in the reinforcing layer 4 without increasing the circumferential rigidity in the protection layer 3.

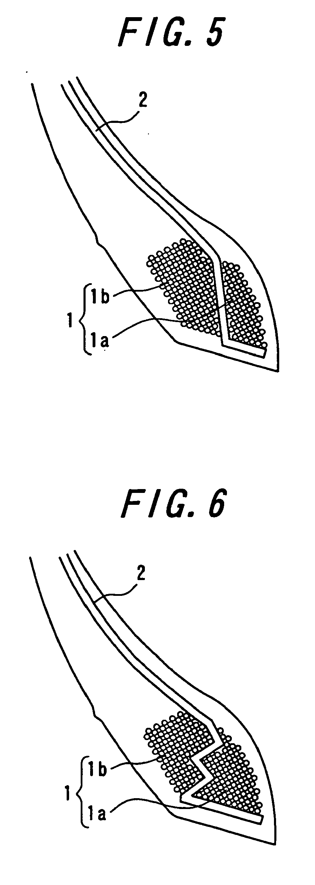

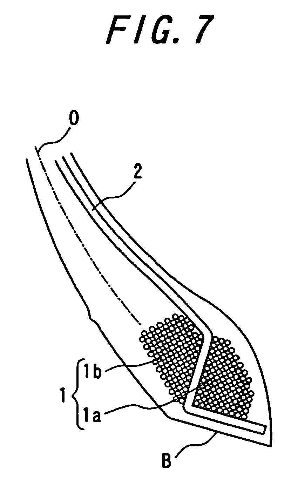

Further, the pathway of the carcass 2 passing through the bead core from an inside of the tire toward an outside thereof is not limited to the form shown in FIG. 1 and may be a small bending form shown in FIG. 5, a zigzag bending form shown in FIG. 6 or a an end extended form shown in FIG. 7.

### EXAMPLES

There is prepared a 15° tapered radial tire (tubeless tire) for truck and bus having a bead portion of a specification shown in Table 1 and a size of 11/70R22.5. With respect to the thus obtained tire as a test tire is evaluated a carcass keeping force after the running over a long time by the following method.

That is, the tire inflated under an internal pressure of 8.0 kgf/cm² is pushed onto a drum under a load of 5000 kg and run at a speed of 60 km/h for a constant time to measure a change of peripheral length at a tire shoulder portion before and after the running. If the carcass keeping force in the bead portion is lowered by the running, the carcass shifts in a direction of the shoulder portion, and hence the peripheral length of the shoulder portion increases. Therefore, this value is an indication for evaluating the carcass keeping force. Moreover, the change of the peripheral length in each of the tires measured is represented by an index on the basis that the change amount of the conventional example in Table 1 is 100. Also, the lateral spring is measured under the same internal pressure and load, and the result is represented by an index on the basis that the value of the lateral spring in the conventional example is 100.

**[Table 1]**

| | Corresponding figure | Changing amount of peripheral length of shoulder portion | Lateral spring | State of bead base portion after running |
|---|---|---|---|---|
| Conventional Example | FIG. 9 | 100 | 100 | no trouble |
| Invention Example 1 | FIG. 1 | 101 | 100 | presence of slight crack in ply end portion |
| Invention Example 2 | FIG. 4 | 101 | 105 | no trouble |
| Invention Example 3 | FIG. 5 | 102 | 100 | presence of slight crack in ply end portion |
| Invention Example 4 | FIG. 6 | 100 | 100 | presence of slight crack in ply end portion |
| Invention Example 5 | FIG. 7 | 101 | 100 | no trouble |
| Comparative Example 1 | FIG. 10 | 110 | 100 | no trouble |
| Comparative Example 2 | FIG. 11 | 108 | 100 | no trouble |
| Comparative Example 3 | FIG. 12 | not measured due to trouble of ply | 92 | presence of slight crack in ply end portion |
| Comparative Example 4 | FIG. 13 | 102 | 94 | presence of slight crack in ply end portion |

As shown in Table 1, the changing amount of peripheral length of the shoulder portion in all of Invention Examples 1-4 is approximately equal to that of the conventional example and the carcass keeping force is maintained over a long time of period. Among them. Invention Example 3 is narrow in the contact area with the lower face of the bead core, so that the changing amount of the peripheral length is somewhat larger than those of the other invention examples. Also, the lateral spring in Invention Examples 1-4 is equal to or more than that of the conventional example. Among them, Invention Example 2 adding with the reinforcing layer at the side face portion of the bead core is further higher in the lateral spring.

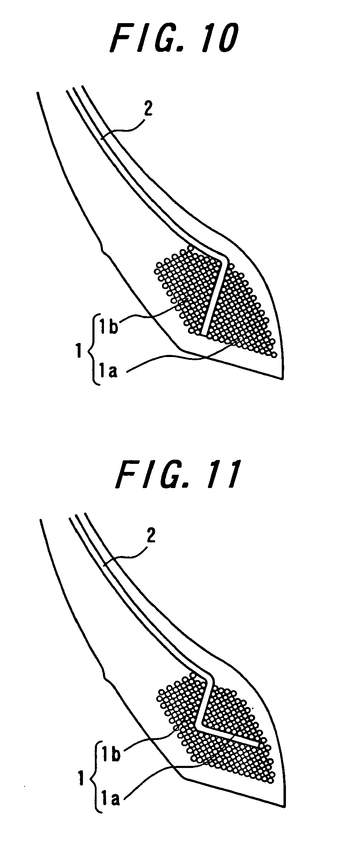

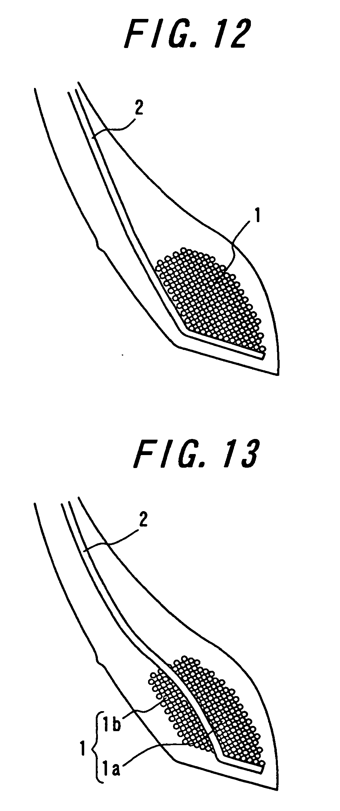

On the other hand, in Comparative Examples 1 and 2 (FIGS. 10 and 11), the ply end portion of the carcass is not arranged at the lower face of the bead core, so that the carcass keeping force can not be maintained over a long time of period and hence the changing amount of the peripheral length of the shoulder portion becomes large. Also, in Comparative Examples 3 and 4 (FIGS. 12 and 13), the carcass is arranged outside the tire from the thickness center O in the axial direction of the tire, so that the lateral spring lowers. In Comparative Example 3, the fatigue trouble is caused in the carcass ply on the way of the running, and the running can not be continued to the last. Further, as the state of the bead base portion after the running is observed, the tire having the protection layer arranged so as to cover the ply end portion of the carcass and the tire not arranging the ply end portion of the carcass at the lower face of the bead core do not cause the trouble, while the tire arranging the ply end portion at the lower face of the bead core but having no protection layer produces a very micro-crack.

## Claims

1. A tire comprising a carcass (2) toroidally extending between a pair of bead cores (1) embedded in respective bead portions, in which the carcass is combined with the bead core wherein the carcass is provided on an inner cavity side of a thickness center (0) of the bead portion in an axial direction of the tire, which reaches to a face of the bead core which faces the inner cavity side of the tire and then enters the bead core from the inner cavity side of the tire, passes through the bead core, exits the bead core from a radially innermost face of the bead core and terminates in contact with the radially innermost face of the bead core.

2. A tire according to claim 1, which further comprises a protection layer(3) covering a portion of the carcass in contact with the face of the bead core at the side of the bead base.

3. A tire according to claim 2, wherein the protection layer is a rubberized layer of cords or wires extending at a small angle with respect to a circumferential direction of the tire and arranged side by side on a plane parallel to the bead base, and a total rigidity thereof in the circumferential direction is equal to or smaller than a total rigidity of a portion of the bead core divided by the passing of the carcass and located inside the tire.

4. A tire according to claim 1, 2 or 3, wherein a circumferential reinforcing layer (4) is further arranged along a side face of a portion of the bead core divided by the passing of the carcass and located outside the tire.

5. A tire according to any one of claims 1 to 4, wherein a reinforcing layer made from cord or wire reinforcing elements arranged at an angle of not less than 10° but not more than 60° with respect to the circumferential direction is further disposed along a side face of a portion of the bead core divided by the passing of the carcass and located outside the tire.

6. A method of producing a tire as described in any one of claims 1 to 5, **characterized in that** when a bead core is shaped by continuously winding a bead wire, a portion of the bead core to be divided by the passing of a carcass and located inside the tire is first formed, and a carcass ply is press-fitted on this portion, and then a portion of the bead core to be divided by the passing of a carcass and located outside the tire is formed by continuously winding the bead wire again.

7. A method of producing a tire according to claim 6, wherein after the formation of the bead core, a protection layer of waved cords or wires is formed along an inner peripheral face of the bead core.

8. A method of producing a tire according to claim 6 or 7, wherein after the formation of the bead core, a circumferential reinforcing layer of previously-tensioned cords or wires is formed along a side face of the portion of the bead core located outside the tire.

9. A method of producing a tire according to claim 6 or 7, wherein after the formation of the bead core, a reinforcing layer made of cord or wire reinforcing elements is formed along a side face of the portion of the bead core located outside the tire.

## Patentansprüche

1. Reifen, der eine Karkasse (2) aufweist, die sich ringförmig zwischen einem Paar von Wulstkernen (1) erstreckt, die in jeweiligen Wulstabschnitten eingebettet sind, wobei die Karkasse mit dem Wulstkern kombiniert wird, wobei die Karkasse auf einer inneren Hohlraumseite einer Dickenmitte (0) des Wulstabschnittes in einer axialen Richtung des Reifens bereitgestellt wird, die eine Seite des Wulstkernes erreicht, die zur inneren Hohlraumseite des Reifens hin liegt, und danach in den Wulstkern von der inneren Hohlraumseite des Reifens eintritt, durch den Wulstkern hindurchgeht, aus dem Wulstkern von einer radial innersten Seite des Wulstkernes austritt und in Kontakt mit der radial innersten Seite des Wulstkernes endet.

2. Reifen nach Anspruch 1, der außerdem eine Schutzschicht (3) aufweist, die einen Abschnitt der Karkasse in Kontakt mit der Seite des Wulstkernes auf der Seite der Wulstsohle bedeckt.

3. Reifen nach Anspruch 2, bei dem die Schutzschicht eine gummierte Schicht aus Korden oder Drähten ist, die sich unter einem kleinen Winkel mit Bezugnahme auf eine Umfangsrichtung des Reifens erstrecken und nebeneinanderliegend in einer Ebene parallel zur Wulstsohle angeordnet sind, und wobei deren Gesamtsteifigkeit in der Umfangsrichtung gleich einer oder kleiner als eine Gesamtsteifigkeit eines Abschnittes des Wulstkernes ist, geteilt durch das Hindurchgehen der Karkasse und innerhalb des Reifens angeordnet.

4. Reifen nach Anspruch 1, 2 oder 3, bei dem eine periphere Verstärkungslage (4) außerdem längs einer Seitenfläche eines Abschnittes des Wulstkernes angeordnet ist, geteilt durch das Hindurchgehen der Karkasse und außerhalb des Reifens angeordnet.

5. Reifen nach einem der Ansprüche 1 bis 4, bei dem eine Verstärkungslage, die aus Kord- oder Drahtverstärkungselementen hergestellt wird, die unter einem Winkel von nicht weniger als 10°, aber nicht mehr als 60°, mit Bezugnahme auf die Umfangsrichtung angeordnet sind, außerdem längs einer Seitenfläche eines Abschnittes des Wulstkernes angeordnet ist, geteilt durch das Hindurchgehen der Karkasse und außerhalb des Reifens angeordnet.

6. Verfahren zur Herstellung eines Reifens, wie er in einem der Ansprüche 1 bis 5 beschrieben wird, **dadurch gekennzeichnet, dass**, wenn ein Wulstkern durch kontinuierliches Wickeln eines Drahtkernes geformt wird, ein Abschnitt des Wulstkernes, der durch das Hindurchgehen einer Karkasse geteilt und innerhalb des Reifens angeordnet werden soll, zuerst gebildet wird, und dass eine Karkassenlage auf diesen Abschnitt pressgepasst wird, und dass danach ein Abschnitt des Reifenkerns, der durch das Hindurchgehen einer Karkasse geteilt und außerhalb des Reifens angeordnet werden soll, durch erneutes kontinuierliches Wickeln des Drahtkerns gebildet wird.

7. Verfahren zur Herstellung eines Reifens nach Anspruch 6, bei dem nach der Bildung des Wulstkerns eine Schutzschicht aus gewellten Korden oder Drähten längs einer inneren Umfangsfläche des Wulstkernes gebildet wird.

8. Verfahren zur Herstellung eines Reifens nach Anspruch 6 oder 7, bei dem nach der Bildung des Wulstkerns eine periphere Verstärkungslage aus vorher gespannten Korden oder Drähten längs einer Seitenfläche des Abschnittes des Wulstkernes gebildet wird, der außerhalb des Reifens angeordnet ist.

9. Verfahren zur Herstellung eines Reifens nach Anspruch 6 oder 7, bei dem nach der Bildung des Wulstkerns eine Verstärkungslage, die aus Kord- oder Drahtverstärkungselementen hergestellt wird, längs einer Seitenfläche des Abschnittes des Wulstkerns gebildet wird, der außerhalb des Reifens angeordnet ist.

## Revendications

1. Bandage pneumatique, comprenant une carcasse (2) s'étendant toroïdalement entre une paire de tringles (1) noyées dans des parties de talon respectives, dans lequel la carcasse est combinée avec la tringle, la carcasse étant agencée sur un côté d'une cavité interne d'un centre d'épaisseur (0) de la partie de talon, dans une direction axiale du bandage pneumatique, atteignant une face de la tringle faisant face au côté de la cavité interne du bandage pneumatique, rentrant ensuite dans la tringle à partir du côté de la cavité interne du bandage pneumatique, passant à travers le tringle, sortant de la tringle à partir de la face radialement interne extrême de la tringle et se terminant en contact avec la face radialement interne extrême de la tringle.

2. Bandage pneumatique selon la revendication 1, comprenant en outre une couche de protection (3), recouvrant une partie de la carcasse en contact avec la face de la tringle au niveau du côté de la base du talon.

3. Bandage pneumatique selon la revendication 2, dans lequel la couche de protection est une couche caoutchoutée de câblés ou de fils métalliques, s'étendant à un angle réduit par rapport à une direction circonférentielle du bandage pneumatique, et agencés côté à côté sur un plan parallèle à la base du talon, une rigidité totale correspondante dans la direction circonférentielle étant égale ou inférieure à une rigidité totale d'une partie de la tringle divisée par le passage de la carcasse et agencée à l'intérieur du bandage pneumatique.

4. Bandage pneumatique selon les revendications 1, 2 ou 3, dans lequel une couche de renforcement circonférentielle (4) est en outre agencée le long d'une face latérale d'une partie de la tringle, divisée par le passage de la carcasse et agencée à l'extérieur du bandage pneumatique.

5. Bandage pneumatique selon l'une quelconque des revendications 1 à 4, dans lequel une couche de renforcement composée d'éléments de renforcement de câblés ou de fils métalliques, agencés à un angle non inférieur à 10°, mais non supérieur à 60° par rapport à la direction circonférentielle, est en outre agencée le long d'une face latérale d'une partie de la tringle, divisée par le passage de la carcasse et agencée à l'extérieur du bandage pneumatique.

6. Procédé de production d'un bandage pneumatique selon l'une quelconque des revendications 1 à 5, **caractérisé en ce que**, lorsqu'une tringle est formée en enroulant en continu un fil métallique de talon, une partie de la tringle devant être divisée par le passage d'une carcasse et agencée à l'intérieur du bandage pneumatique est formée en premier lieu, une nappe de carcasse étant ajustée par pression sur cette partie, une partie de la tringle devant être divisée par le passage d'une carcasse et agencée à l'extérieur du bandage pneumatique étant formée en enroulant de nouveau en continu le fil métallique du talon.

7. Procédé de production d'un bandage pneumatique selon la revendication 6, dans lequel, après la formation de la tringle, une couche de protection composée de câblés ou de fils métalliques ondulés est formée le long d'une face périphérique interne de la tringle.

8. Procédé de production d'une bandage pneumatique selon les revendications 6 ou 7, dans lequel, après la formation de la tringle, une couche de renforcement circonférentielle de câblés ou de fils métalliques tendus d'avance est formée le long d'une face latérale de la partie de la tringle agencée à l'extérieur du bandage pneumatique.

9. Procédé de production d'une bandage pneumatique selon les revendications 6 ou 7, dans lequel, après la formation de la tringle, une couche de renforcement composée d'éléments de renforcement de câblés ou de fils métalliques est formée le long d'une face latérale de la partie de la tringle agencée à l'extérieur du bandage pneumatique.
